# EUROPEAN PATENT SPECIFICATION

(11) **EP 3 116 234 B1**
(45) Date of publication and mention of the grant of the patent: **29.08.2018**
(21) Application number: 15176082.4
(22) Date of filing: 09.07.2015
(51) Int. Cl.: H04Q 11/00

(54) **METHOD FOR TRANSMITTING SIGNALLING INFORMATION WITH REDUCED IDENTFIYING INFORMATION IN AN OPTICAL COMMUNICATIONS NETWORK**
VERFAHREN ZUR ÜBERTRAGUNG VON SIGNALISIERUNGSINFORMATIONEN MIT REDUZIERTEN IDENTIFIZIERUNGSINFORMATIONEN IN EINEM OPTISCHEN ÜBERTRAGUNGSNETZWERK
PROCÉDÉ POUR TRANSMETTRE DES INFORMATIONS DE SIGNALISATION AVEC DES INFORMATIONS D'IDENTIFICATION RÉDUITE DANS UN RÉSEAU DE COMMUNICATION OPTIQUE

(43) Date of publication of application: 11.01.2017
(73) Proprietor: Mitsubishi Electric R&D Centre Europe B.V., 1119 NS Schiphol Rijk (NL); Mitsubishi Electric Corporation, Chiyoda-ku Tokyo 100-8310 (JP)
(72) Inventor: FROC, M. Gwillerm, 35708 RENNES Cedex 7 (FR)
(74) Representative: Cabinet Le Guen Maillet

(56) References cited:
- EP-A1- 2 242 213
- EP-A1- 2 425 633
- US-A1- 2006 256 811

## Description

The present invention generally relates to optical communications networks and more particularly to managing devices' respective identifiers used by said devices when accessing an out-of-band signalling communication channel.

Optical communications networks, and more particularly passive optical communications networks, are increasingly used to give network access to residential or office gateways, or data centres, or to ensure mobile backhauling for instance.

In an attempt to increase the number of user terminals to be served by one access system to the network, wavelength (or frequency) division multiplexing technologies have been developed. These technologies take advantage of multiplexing several optical signals using different carrier frequencies on a single optical fiber. Even though some user terminals may share the same carrier frequency, a frequency splitter is typically used to separate different frequencies in use, in order to increase the number of simultaneous optical transmissions. The frequency splitter is typically placed between the user terminals and a set of master terminals providing access to the rest of the network. For instance these master terminals provide access to a metropolitan network or a core network. Different techniques can be used to achieve such frequency splitting. We can cite thin films based systems, interference cavities as AWG (*Array Wavelength Gratings*) and FBG (*Fiber Bragg Gratings*) based systems.

The frequency splitter then comprises several optical band-pass filters, for each direction of communication. It is used to filter and combine optical signals issued by the user terminals toward the master terminal to which said user terminals are attached, each user terminal being then supposed to communicate with one master terminal. In the other direction, it is used to filter and spectrally split the optical signals issued by the master terminal toward the user terminals that are attached thereto.

The difficulty in such an arrangement is to configure the transmission interfaces of the terminals. Indeed, these transmission interfaces shall be configured so that the carrier frequencies effectively used are substantially equal to the nominal frequencies of the respective optical band-pass filters via which they communicate. However, the nominal frequencies of the respective optical band-pass filters and/or the carrier frequencies resulting from the effective configuration of the transmission interfaces of the terminals may vary according to environmental conditions, such as temperature for instance. Use of non-temperature controlled environment is usually preferable, as it requires less complexity to operate, especially regarding the user terminals. Since the nominal frequencies of the respective optical band-pass filters may be a priori unknown and/or since the effective configuration of the transmission interfaces of the terminals may be a priori unknown, there is therefore a need to be able to appropriately define the configuration of the transmission interfaces of the terminals in order to lock the carrier frequencies effectively in use with respect to the effective nominal frequencies of the respective optical band-pass filters, for setting up communications between optical communication devices separated by such optical band-pass filters.

Communications within such optical communications networks are typically relying on baseband signals transmitted over an optical carrier frequency and are referred to as *in-band communications.* The baseband is for instance defined as the range from 1 GHz to 10 GHz. The baseband corresponds to the spectrum range in which are located components resulting from any in-band communication signal which are significant to perform the decoding of the in-band communication signal.

In order to perform the aforementioned frequency locking and in order not to interfere with in-band communications that are established within the optical communications network or in order to prevent any signalling from using the spectrum resource used by the in-band communications, an out-of-band communication channel may be established for allowing implementing a locking protocol or any other signalling protocol. Out-of-band communications between two optical communication devices use the same carrier frequency than in-band communications between said two optical communication devices. The term *out-of-band* indicates that the communications occurring within the out-of-band communication channel rely on a spectrum part distinct from the baseband of the in-band communications, typically much lower in terms of frequency than the in-band communications baseband lower limit, which means that the baud rate in the out-of-band communication channel is much lower than the baud rate in the baseband of the communication signal. Regarding frequency locking, a possible approach is that an initiating device among first and second optical communication devices transmits via the out-of-band communication channel a locking signal to the other optical communication device among the first and second optical communication devices, by using a given carrier frequency. The initiating device performs so by scanning various frequencies until matching the nominal frequency of the concerned optical band-pass filter.

Such an out-of-band communication channel may be established for providing other types of signalling information. However, when two user terminals use the same carrier frequency to access the out-of-band communication channel toward the master terminal to which said terminals are attached, collisions may occur since said user terminals are not able to sense the medium before transmitting signals (contrary to most radiofrequency or wired systems), which may render difficult (even though potentially not impossible) signal decoding at the master terminal's end. The longer said signals transmitted via the out-of-band communication channel, the higher the risk that such a collision occur.

The patent application EP 2 425 633 A1 discloses an optical communications network comprising a master device and slave devices connected to the master device via optical fiber, in which the master device propagates a bit mask so as to enable using reduced identifiers in communications within the optical communications network.

It is therefore desirable to be able to limit occurrences of such collisions.

It is furthermore desirable to provide a cost-effective solution to the aforementioned problem.

The present invention concerns a method for transmitting signalling information via an out-of-band communication channel in an optical communications network comprising a master device and slave devices connected to the master device via optical fiber, the signalling information containing identifying information aiming at identifying the slave device transmitting said signalling information, the optical communications network being adapted to enable in-band communications, the out-of-band communication channel being intended to enable transmissions of said signalling information with respect to the in-band communications, collisions occurring in the out-of-band communication channel when plural slave devices access the out-of-band communication channel by using respective carrier wavelengths that match each other. The method is such that the master device transmits, to each slave device likely to concurrently access the out-of-band communication channel, information representative at least of a mask that said slave devices has to apply to respective full identifiers of said slave devices so as to obtain respective reduced identifying information to be used by said slave devices within further signalling information to be respectively transmitted by said slave devices, the reduced identifying information for each slave device aiming at containing enough bits according to said mask to enable distinguishing said slave device from the other slave devices likely to concurrently access the out-of-band communication channel. Moreover, the master device further receives, via the out-of-band communication channel, a so-called announcing signalling information, and the master device transmits said information representative at least of said mask, in response to said announcing signalling information. Moreover, when the identifying information contained in said announcing signalling information enables discriminating said slave device from other slave devices likely to concurrently access the out-of-band communication channel, the master device stores said identifying information, and when the in-band communications are setup from said slave device to said master device, the master device receives the full identifier of slave device within said in-band communications and replaces the stored identifying information by the full identifier of said slave device. Thus, by using said reduced identifying information according to said mask, the size of the identifying information effectively included in said further signalling information is reduced compared with the full identifier of the concerned slave device, which significantly reduces the risk of collision with other signalling information transmitted by slave device likely to concurrently access the out-of-band communication channel.

In addition, a slave device joining the optical communications network can rapidly use the reduced identifying information, and can rapidly reduce the risk of collision with other signalling information transmitted by slave device likely to concurrently access the out-of-band communication channel. In addition, discriminating bits are easily identified when another slave device joins later the optical communications network, and this, without increasing risk of collisions via the out-of-band communication channel since in-band communications, which are by definition far faster, is used to transmit the full identifier of said slave device.

According to a particular feature, the master device performs, upon receiving said announcing signalling information: determining whether the identifying information contained in said announcing signalling information enables discriminating said slave device from other slave devices likely to concurrently access the out-of-band communication channel; transmitting the information representative at least of said mask when said the identifying information contained in said announcing signalling information enables discriminating said slave device from other slave devices likely to concurrently access the out-of-band communication channel; and transmitting, otherwise, a request to transmit a new announcing signalling information containing further identifying information. Thus, a slave device joining the optical communications network is easily handled with respect to the reduction of size of its identifying information to be included in further signalling information transmission from said slave device.

According to a particular feature, said request explicitly indicates which bits of its full identifier said slave device is expected to include in the new announcing signalling information. Thus, convergence is more rapidly reached.

According to a particular feature, when said mask transmitted in response to said announcing signalling information differs from a preceding mask that was applicable to the slave devices that were already known by the master device to be likely to concurrently access the out-of-band communication channel with regard to the slave device having transmitted said announcing signalling information, the master device broadcasts an updated mask to the slave devices, which is applicable to all said slave devices likely to concurrently access the out-of-band communication channel. Thus, discrimination is made easier and faster for slave devices that were already present in the optical communications network.

The present invention also concerns a method for transmitting signalling information via an out-of-band communication channel in an optical communications network comprising a master device and slave devices connected to the master device via optical fiber, the signalling information containing identifying information aiming at identifying the slave device transmitting said signalling information, the optical communications network being adapted to enable in-band communications, the out-of-band communication channel being intended to enable transmissions of said signalling information with respect to the in-band communications, collisions occurring in the out-of-band communication channel when plural slave devices access the out-of-band communication channel by using respective carrier wavelengths that match each other. Said method is such each slave device receives, from the master device, information representative at least of a mask that said slave device has to apply to a full identifier of said slave device so as to obtain reduced identifying information to be used by said slave device within further signalling information to be transmitted by said slave device, the reduced identifying information aiming at containing enough bits according to said mask to enable distinguishing said slave device from the other slave devices likely to concurrently access the out-of-band communication channel. Moreover, each slave device further transmits, via the out-of-band communication channel, a so-called announcing signalling information, and each slave device receives said information representative at least of said mask, in response to said announcing signalling information. Moreover, when the in-band communications are setup from one said slave device to said master device, said slave device transmits the full identifier of said slave device within said in-band communications so as to enable the master device replacing identifying information that enables discriminating said slave device from other slave devices likely to concurrently access the out-of-band communication channel and that was then previously stored by the master device, by the full identifier of said slave device.

The present invention also concerns a method for transmitting signalling information via an out-of-band communication channel in an optical communications network comprising a master device and slave devices connected to the master device via optical fiber, such that the master device acts as mentioned above, and each slave acts as mentioned above.

According to a particular feature, an optical transmission interface of said slave device has to be adjusted for transmitting optical signals to the master device via an optical band-pass filter, the master device having an optical reception interface configured to enable receiving optical signals output by said optical band-pass filter and transmitted by said slave device on a carrier wavelength when said carrier wavelength is comprised in the passband of the optical band-pass filter, said carrier wavelength being *a priori* unknown and/or said passband of the optical band-pass filter being *a priori* unknown, and wherein said signalling information is used to lock said carrier wavelength with respect to said passband of the optical band-pass filter. Thus, since locking carrier wavelengths is resource consuming over the out-of-band communication channel, the reduction of the size of the identifying information included in the signalling information used for locking said carrier wavelengths particularly reduces the risk of collisions via the out-of-band communication channel.

The present invention also concerns a master device adapted to receive signalling information via an out-of-band communication channel in an optical communications network further comprising slave devices connected to the master device via optical fiber, the signalling information containing identifying information aiming at identifying the slave device transmitting said signalling information, the optical communications network being adapted to enable in-band communications, the out-of-band communication channel being intended to enable transmissions of said signalling information with respect to the in-band communications, collisions occurring in the out-of-band communication channel when plural slave devices access the out-of-band communication channel by using respective carrier wavelengths that match each other. The master device is such that said master device implements means for transmitting, to each slave device likely to concurrently access the out-of-band communication channel, information representative at least of a mask that said slave devices have to apply to respective full identifiers of said slave devices so as to obtain respective reduced identifying information to be used by said slave devices within further signalling information to be respectively transmitted by said slave devices, the reduced identifying information for each slave device aiming at containing enough bits according to said mask to enable distinguishing said slave device from the other slave devices likely to concurrently access the out-of-band communication channel. Moreover, the master device further implements means for receiving, via the out-of-band communication channel, a so-called announcing signalling information, and means for transmitting said information representative at least of said mask, in response to said announcing signalling information, wherein, when the identifying information contained in said announcing signalling information enables discriminating said slave device from other slave devices likely to concurrently access the out-of-band communication channel, the master device implements means for storing said identifying information. Moreover, when the in-band communications are setup from said slave device to said master device, the master device implements means for receiving the full identifier of slave device within said in-band communications and means for replacing the stored identifying information by the full identifier of said slave device.

The present invention also concerns a slave device adapted to transmit signalling information via an out-of-band communication channel in an optical communications network further comprising a master device and other slave devices also connected to the master device via optical fiber, the signalling information containing identifying information aiming at identifying the slave device transmitting said signalling information, the optical communications network being adapted to enable in-band communications, the out-of-band communication channel being intended to enable transmissions of said signalling information with respect to the in-band communications, collisions occurring in the out-of-band communication channel when plural slave devices access the out-of-band communication channel by using respective carrier wavelengths that match each other. Said slave device is such that said said slave device implements means for receiving, from the master device, information representative at least of a mask that said slave device has to apply to a full identifier of said slave device so as to obtain reduced identifying information to be used by said slave device within further signalling information to be transmitted by said slave device, the reduced identifying information aiming at containing enough bits according to said mask to enable distinguishing said slave device from the other slave devices likely to concurrently access the out-of-band communication channel. Moreover, said slave device further implements means for transmitting, via the out-of-band communication channel, a so-called announcing signalling information, and said slave device receives said information representative at least of said mask, in response to said announcing signalling information. Moreover, when the in-band communications are setup from said slave device to said master device, said slave device implements means for transmitting the full identifier of said slave device within said in-band communications so as to enable the master device replacing identifying information that enables discriminating said slave device from other slave devices likely to concurrently access the out-of-band communication channel and that was then previously stored by the master device, by the full identifier of said slave device.

The present invention also concerns a system adapted to transmit signalling information via an out-of-band communication channel in an optical communications network, characterized in that the system comprises the aforementioned master device and a plurality of aforementioned slave devices, the slave devices being connected to the master device via optical fiber.

According to a particular feature, said system is such that an optical transmission interface of said slave device has to be adjusted for transmitting optical signals to the master device via an optical band-pass filter, the master device having an optical reception interface configured to enable receiving optical signals output by said optical band-pass filter and transmitted by said slave device on a carrier wavelength when said carrier wavelength is comprised in the passband of the optical band-pass filter, said carrier wavelength being *a priori* unknown and/or said passband of the optical band-pass filter being *a priori* unknown, and wherein said signalling information is used to lock said carrier wavelength with respect to said passband of the optical band-pass filter.

The present invention also concerns a computer program that can be downloaded from a communications network and/or stored on a medium that can be read by a computer and run by a processor. This computer program comprises instructions for implementing the aforementioned method with respect to the master device or the aforementioned method with respect to the slave devices, when said program is run by the processor. The present invention also concerns an information storage medium, storing a computer program comprising a set of instructions for implementing the aforementioned method in any one of its various embodiments, when the stored instructions are read by a computer and run by a processor.

The characteristics of the invention will emerge more clearly from a reading of the following description of an example of embodiment, said description being produced with reference to the accompanying drawings, among which:
Fig. 1 schematically represents an arrangement of an optical communications network, including a master device and a plurality of slave devices, in which the present invention may be implemented;
Fig. 2 schematically represents an arrangement of the master device of the optical communications network;
Fig. 3 schematically represents an algorithm, performed by the master device, for processing announcing signalling information received via the out-of-band communication channel;
Fig. 4 schematically represents an algorithm, performed by each slave device, for transmitting announcing signalling information via the out-of-band communication channel;
Fig. 5 schematically represents an algorithm, performed by each slave device, for transmitting further signalling information via the out-of-band communication channel; and
Fig. 6 schematically represents an algorithm, performed by the master device, for processing said further signalling information received via the out-of-band communication channel;
Fig. 7 schematically represents an algorithm, performed by each slave device, for transmitting identifying information via an in-band communication; and
Fig. 8 schematically represents an algorithm, performed by each slave device, for said processing identifying information received via said in-band communication.

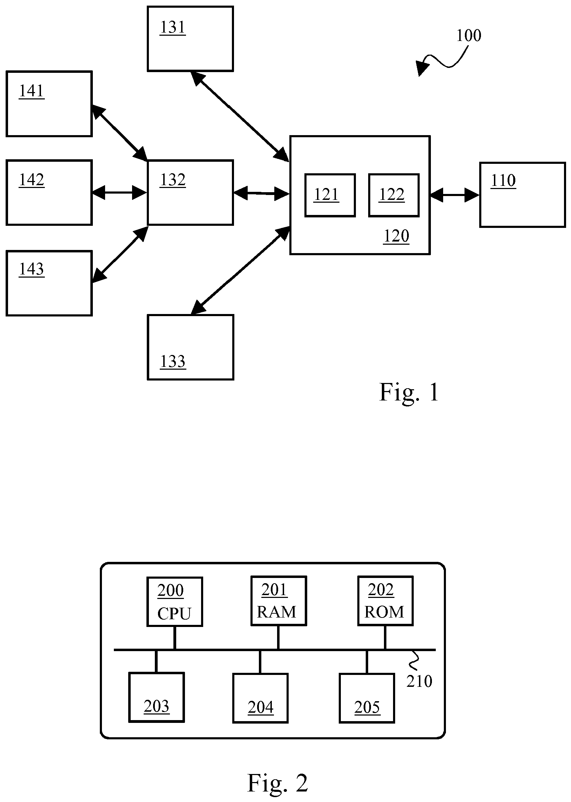

**Fig. 1** schematically represents an arrangement of a passive optical network in which the present invention may be implemented.

It has to be noticed that, since wavelength and frequency are tied together through a direct inverse relationship, these two terms are indifferently used by the one skilled in the art, as they refer to the same concept.

The description hereafter is detailed in the context of a passive optical communications network, but can be similarly applied in the more general context of optical communications networks.

The passive optical communications network 100 comprises a master device 110, a plurality of slave devices 141, 142, 143, and a spectral splitter device 120. The slave devices 141, 142, 143 are interconnected with the master device 110 via the spectral splitter device 120. Power splitters, as described hereafter, may be placed between the slave devices and the spectral filter device 120 in order to increase the number of slave devices that can be interconnected with the master device 110. All the interconnections of the passive optical communications network 100 are performed by using optical fiber. A particular hardware-platform embodiment for implementing the master device 110 and the slave devices 141, 142, 143 is detailed hereafter with regard to Fig. 2.

In the context of the passive optical communications network 100, the slave devices 141, 142, 143 are of ONU (*Optical Network Units*) type. ONUs are typically intended to be located at the end-user households or at remote radio heads for fronthauling applications.

In the context of the passive optical communications network 100, the master device 110 is of OLT (*Optical Line Terminal*) type. It enables ONUs to access a metropolitan or a core network (not shown).

The slave devices 141, 142, 143 may be connected to the spectral splitter device 120 via a power splitter device 132. The power splitter device 132 is a passive splitter that separates the input signal, in the downlink direction (from the master device 110 toward the slave devices), into a plurality of corresponding signals which power is divided by the number of links towards the slave devices 141, 142, 143. The signals output by the power splitter device 132, on each link in the downlink direction, contain the same information as the input signal, the power splitter device 132 having only impact on the power of the signals.

Other slave devices may be connected to the spectral splitter device 120 via power splitter devices 131, 133. Each power splitter device 131, 132, 133, and the slave devices connected to, form a network of PON (*Passive Optical Network*) type with the master device to which said slave devices are attached. The PONs operate on respective wavelength bands, as filtered by the spectral splitter device 120. To achieve this, the spectral splitter device 120 comprises a pair of optical band-pass sets of filters for each PON, aiming at filtering respective wavelength bands, and thus enabling the spectral splitter device 120 to perform Wavelength Division Multiplexing.

Therefore, as shown on Fig. 1, the spectral splitter device 120 comprises sets 121, 122 of optical band-pass filters dedicated to the transmissions over the PON of the power splitter device 132 and its associated slave devices 141, 142, 143. The set of filters 122, called hereinafter uplink filters, is in charge of filtering the optical signals in the uplink direction (from the slave devices 141, 142, 143 to the master device 110, which are in the same PON). The set of filters 121, called hereinafter downlink filters, is in charge of filtering the optical signals in the downlink direction. Each filter of the sets 121, 122 is a band-pass filter defined by a nominal wavelength, also referred to as centre wavelength, as well as a bandwidth. Each filter of the sets 121, 122 may also be defined by a spectral shape.

For a considered uplink or downlink direction, all the filters of the spectral splitter device 120 have preferably the same bandwidth value and are preferably spaced by a fixed spectral distance. However, the nominal wavelengths of the filters may be *a priori* unknown. The spectral splitter device 120 being preferably passive, the nominal wavelengths of the filters may vary as a function of the temperature of the spectral splitter device 120 (heat generated by the spectral splitter device 120 or by equipment located nearby, or environmental conditions).

It has to be noticed that, the band-pass filters being designed upon the same constraints, the bandwidth value of the filters and the spectral distance between the filters are substantially independent of the temperature variations.

In addition, the effective carrier wavelength corresponding to a given configuration of the optical transmission interface of either a slave device 141, 142, 143 or the master device 110 may not be known, and may also vary as a function of temperature.

Therefore, the slave devices 141, 142, 143 need to be configured for transmitting optical signals in the uplink direction on carrier wavelengths that are substantially equal to the nominal frequency of the concerned uplink filter of the set 122. In addition, the master device 110 needs to be configured for transmitting optical signals in the downlink direction on a carrier wavelength that is substantially equal to the nominal frequency of the concerned downlink filter of the set 121. In other words, when the nominal frequency of said passband filters are unknown and/or the effective carrier frequencies in use are unknown, carrier frequencies need to be locked and an out-of-band communication channel is implemented for doing so, as detailed hereinafter. Said out-of-band communication channel may further be used to transmit other signalling information. More particularly, the out-of-band communication channel is intended to enable transmissions of signalling information with respect to the in-band communications in the form of modulation symbols over successive symbol periods. Such signalling information may for instance include class of service or data rate information related to the in-band communications traffic from said slave device toward the master device, or any other information known by said slave device and useful for the master device 110 for enabling management of the in-band communications. Such signalling information may also include operational information, such as battery remaining load, environmental temperature, when the concerned slave device is equipped with adapted sensors, or any other information known by said slave device and useful for the master device 110 for enabling operational management of the passive optical communications network 100.

It can be noticed that a carrier frequency matching the passband of a given filter is considered as substantially equal to the nominal frequency of said given filter.

It can be noted that the nominal wavelengths of filters of the sets 121, 122 may be identical. It means that either a same carrier wavelength or different carrier wavelengths can be used in the downlink and uplink directions.

It can further be noted that an equivalent arrangement can be obtained by sticking filtering films on respective reception diodes of the optical communications network instead of using the spectral splitter device 120. In this case too, uplink and downlink filters are present on the path between the master device 110 and the slave devices.

In order to allow locking the carrier frequency between one slave device, such as the slave device 141, and the master device 110, an approach is that the slave device transmits a locking signal via the out-of-band communication channel. This locking signal is transmitted over a carrier frequency selected, e.g. arbitrarily, by said slave device. When the out-of-band communication channel is already setup from the master device 110 to said slave device, the master device 110 can transmit an out-of-band message to said slave device when the locking signal is received by the master device 110 (when the carrier frequency used for the locking signal matches the nominal frequency of the concerned uplink filter of the set 122). When no such out-of-band message is received by said slave device within a predefined time period following the transmission of the locking signal, said slave device reiterates the process with another carrier frequency, and so on until having used a carrier frequency that matches the nominal frequency of the concerned uplink filter of the set 122. When an in-band communication is already setup from the master device 110 to said slave device, the master device 110 may use instead an in-band message to respond to the locking signal. Other approaches can be implemented for locking the carrier frequency effectively in use by said slave device so as to match the nominal frequency of the concerned uplink filter of the set 122. For instance, locking the carrier frequency can be achieved in the uplink direction using a mirror-based approach described in patent application EP 2466768 A1.

In order to avoid generating interferences with in-band communications already setup in the passive optical communications network 100, for instance from the slave device 142 to the master device 110, it is proposed to generate a particularly shaped locking signal. Any receiver device of the passive optical communications network 100, such as the master device 110, is thus able to distinguish the locking signal from signals of an already-setup in-band communication and to continue decoding the signals exchanged within said already-setup in-band communication. The locking signal is a modulated signal obtained from information to be transmitted to the master device 110. In a particular embodiment, the modulation is for instance performed by a circular function which frequency Ω is lower than the baud rate of the in-band communications. In other words, the frequency Ω is lower than the lower limit of the baseband, wherein it is recalled that the baseband corresponds to a range of frequencies that have to be filtered out to decode the in-band communication signals. In a preferred embodiment, the frequency Ω is significantly lower than the lower limit of the baseband. For instance, the frequency Ω equals 1 MHz and the lower limit of the baseband is 1 GHz (or up to 10 GHz). Different kind of modulation techniques can be used to provide signalling information via the locking signal. The locking signal may be, for instance, modulated using Amplitude Shift Keying (ASK) modulation or Frequency Shift Keying (FSK) modulation or Phase Shift Keying (PSK) modulation, or any kind of modulation derived therefrom, such as a modulation of differential type (Differential Frequency Shift Keying,...). In a preferred embodiment, said slave device apodizes the modulated signal, *i.e.* removes or smoothes sharp discontinuities in the modulated signal. Said slave device thus ensures that the apodized modulated locking signal smoothly tends toward zero at the beginning and at the end of the signal so that no transient frequencies in the baseband are generated in the locking signal. Embodiments for generating out-of-band communication signals and discriminating said out-of-band communication signals from in-band communication signals are disclosed in the European patent application published under the reference EP 2 621 112 A1.

As already mentioned, the out-of-band communication channel may be used for transmitting other signalling information than in the scope of the carrier frequency locking process. Said signalling information is transmitted via the out-of-band communication channel with the same signal shape as the aforementioned locking signal. Signalling information can thus be coded by relying on the modulation used to form the out-of-band signal. Signalling information is preferred compared with other types of information, since the baud rate achievable via the out-of-band communication channel is, by definition, far lower than the baud rate achievable via the in-band communication channel, and therefore information transmitted via the out-of-band communication channel is expected to be limited in terms of size, in order to limit occurrences of collisions and to ease sharing access to the out-of-band communication channel between the slave devices. Collisions occur in the out-of-band communication channel when plural slave devices access the out-of-band communication channel by using respective carrier wavelengths that match each other. Said carrier wavelengths match each other when the carrier wavelengths are within the same detection channel from the standpoint of the master device 110 (carrier wavelengths detected by the master device 110 as crossing the same uplink filter of the set 122).

It can be noted that such collisions occur also in the scope of PON-only optical networks, since in that case the slave devices communicate with the master device within the same detection channel from the standpoint of the master device 110 (since, in the scope of Fig. 1, the spectral splitter device 120 aims at creating plural independent detection channels usable by distinct master devices).

In order to reduce the risk of occurrence of such collisions, it is proposed that the signalling information, including identifying information aiming at identifying the slave device that transmits the signalling information, as transmitted via the out-of-band communication channel be as short as possible. The proposal is to reduce the size of the identifying information by attempting limiting said identifying information to bits allowing discriminating the slave device transmitting the signalling information among the other slave devices likely to concurrently access the out-of-band communication channel.

To achieve this goal, the master device transmits information representative at least of a mask that said slave devices have to apply to respective full identifiers so as to obtain respective reduced identifying information to be used by said slave devices within further signalling information to be respectively transmitted by said slave devices, the reduced identifying information aiming at containing enough bits to enable distinguishing the slave device from each other.

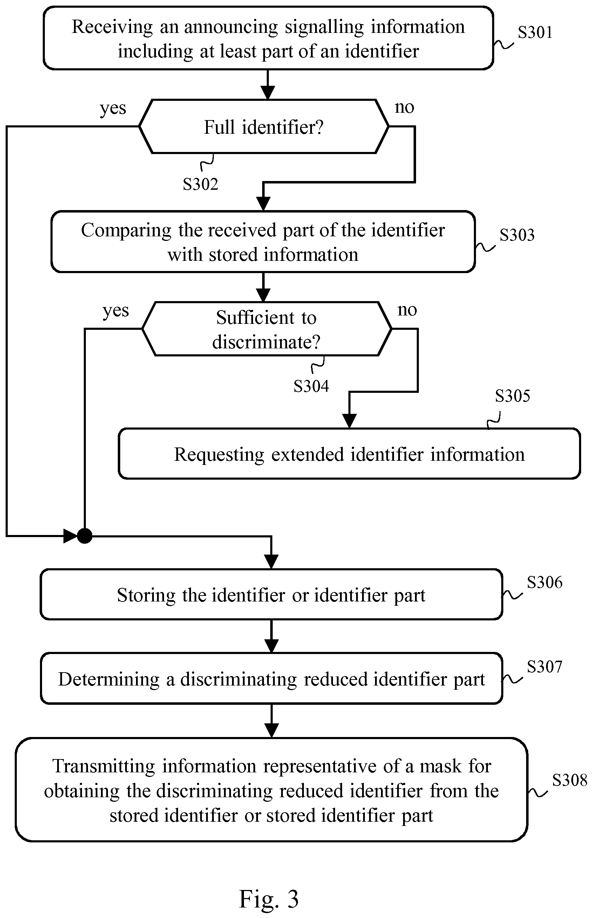

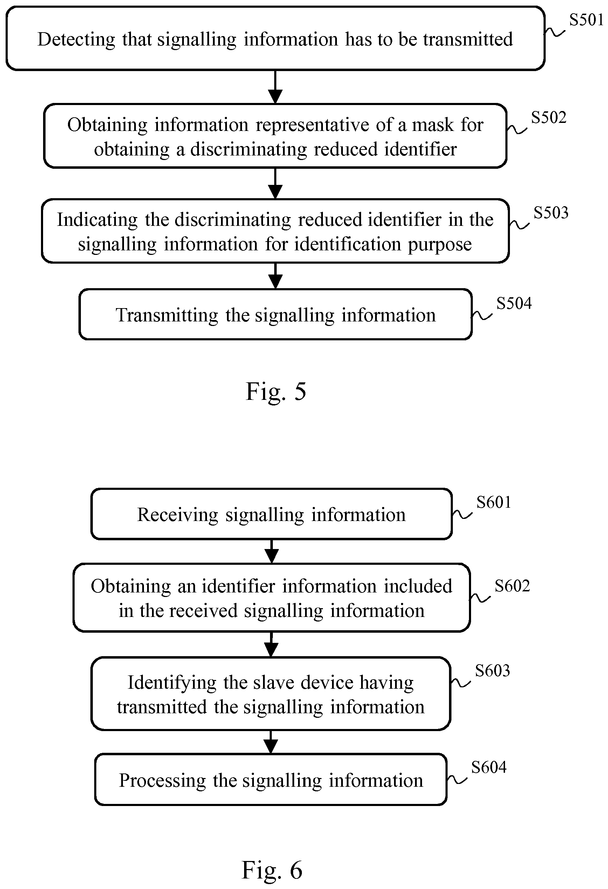

Algorithms performed by the master device 110 for processing signalling information received via the out-of-band communication channel are detailed hereafter with regard to Figs. 3 and 6.

It is considered herein that the out-of-band communication channel is already setup in the downlink direction, from the master device 110 to the slave device transmitting the signalling information, prior to transmitting and processing said signalling information, in order to perform transmissions in response thereof, as discussed with regard to Figs. 3 to 8. For instance, said out-of-band communication channel is already setup in the downlink direction is setup using the mirror-based approach described in patent application EP 2466768 A1. Since the carrier frequency used by the master device 110 for transmitting signals to said slave device via the out-of-band communication channel (*i.e.* in the downlink direction) is the same as the carrier frequency used for transmitting in-band communication signals to said slave device, it may be considered, instead or in addition, that in-band communications are already setup from the master device 110 to the slave device (*i.e.* in the downlink direction) to allow said transmissions in response to said signalling information.

The aforementioned mask may then be transmitted using the out-of-band communication channel in the downlink direction. The aforementioned mask may then be transmitted, in a variant, by using the in-band communications in the downlink direction. Usage of such a mask is detailed hereafter in a preferred embodiment of dynamically defining said mask upon appearance or disappearance of slave devices in the passive optical communications network 100.

The slave devices likely to be present in the concerned PON may be known, by configuration, by the master device 110. In this case, the master device 110 transmits said mask according to modifications of said configuration, e.g. when an operator managing the passive optical communications network 100 adds or removes a slave device from said configuration, the master device 110 updates said mask, if needed, and consequently transmit an updated mask to the slave devices, by relying on the principles detailed hereafter.

**Fig. 2** schematically represents an arrangement of the master device 110. According to the shown arrangement, the master device 110 comprises the following components interconnected by a communications bus 210: a processor, microprocessor, microcontroller or CPU (*Central Processing Unit*) 200; a RAM (*Random-Access Memory*) 201; a ROM (*Read-Only Memory*) 202; a device 203 adapted to read information stored on storage means; a first communication interface 204, aiming at being connected to the spectral splitter device 120 for transmitting and receiving optical signals; and, a second communication interface 205, aiming at being connected to the metropolitan or core network.

CPU 200 is capable of executing instructions loaded into RAM 201 from ROM 202 or from any other storage means. After the master device 110 has been powered on, CPU 200 is capable of reading instructions from RAM 201 and executing these instructions. The instructions form one computer program that causes CPU 200 to perform some or all of the steps of the algorithms described hereafter with regard to Figs. 3, 6 and 8. Any and all steps of the algorithms described hereafter with regard to Figs. 3, 6 and 8 may be implemented in software by execution of a set of instructions or program by a programmable computing machine, such as a DSP (*Digital Signal Processor*) or a microcontroller; or else implemented in hardware by a machine or a dedicated component, such as an FPGA (*Field-Programmable Gate Array*) or an ASIC (*Application-Specific Integrated Circuit*).

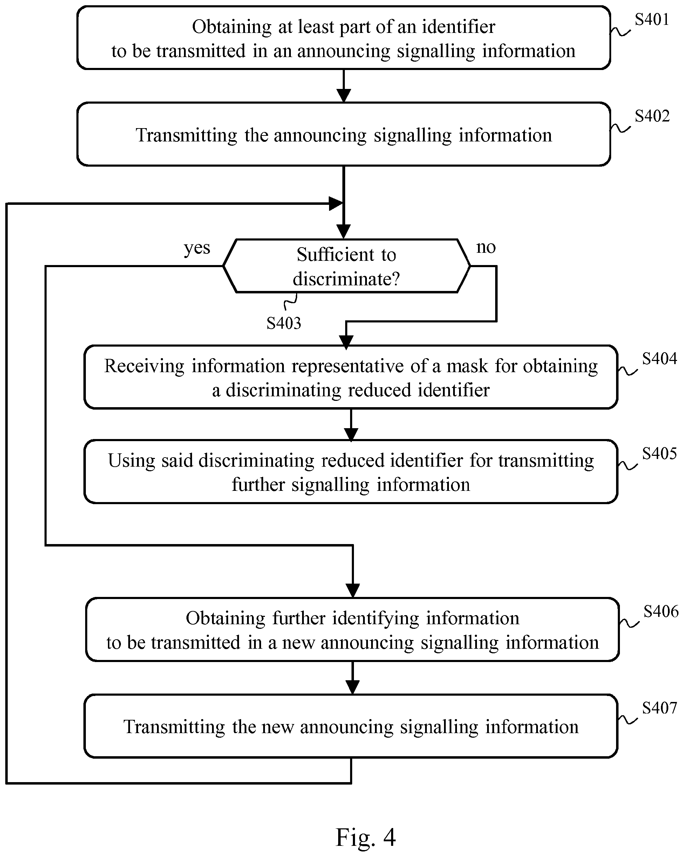

It can be noted that the slave devices 141, 142, 143 may also be implemented on the basis of the arrangement schematically shown in Fig. 2. In this case, the first communication interface 204 allows communicating with the master device 110, potentially through the spectral splitter device 120, and the second communication interface 205 allows connecting the considered slave device 141, 142, 143 to a local area network, such as a home network. In this case, CPU 200 is capable of executing instructions loaded into RAM 201 from ROM 202 or from any other storage means. After the considered slave device has been powered on, CPU 200 is capable of reading instructions from RAM 201 and executing these instructions. The instructions form one computer program that causes CPU 200 to perform some or all of the steps of the algorithms described hereafter with regard to Figs. 4, 5 and 7. Any and all steps of the algorithms described hereafter with regard to Figs. 4, 5 and 7 may be implemented in software by execution of a set of instructions or program by a programmable computing machine, such as a DSP or a microcontroller; or else implemented in hardware by a machine or a dedicated component, such as an FPGA or an ASIC.

**Fig. 3** schematically represents an algorithm, performed by the master device 110, for processing signalling signals received via the out-of-band communication channel.

In a step S301, the master device 110 receives an announcing signalling information including at least part of the identifier of the slave device having transmitted said announcing signalling information. Said signalling information is so-called announcing signalling information since the slave device having transmitted said signalling information uses said signalling information to announce its presence in the passive optical communications network 100. Said announcing signalling information is typically part of the initial locking process implemented for locking the carrier frequency used by said slave device to enable uplink communications toward the master device 110. An algorithm implemented by said slave device for transmitting the announcing signalling information is described hereafter with regard to Fig. 4.

In a following step S302, the master device 110 determines whether the announcing signalling information includes only part of the identifier of the slave device having transmitted said announcing signalling information or the full identifier of the slave device having transmitted said announcing signalling information. When the announcing signalling information includes only part of the identifier of the slave device having transmitted said announcing signalling information, a step S303 is performed; otherwise, a step S306 is performed. The identifiers of the slave devices are typically represented using a predefined quantity of bits, e.g. sixty-four bits or one hundred and twenty eight bits. The master device 110 determines whether the announcing signalling information includes a subset only of said predefined quantity of bits. To do so, the announcing signalling information contains information allowing to determine the quantity of bits used to by the slave device to provide information identifying said slave device. The master device 110 typically knows in advance, from the quantity of bits used to by the slave device to provide information identifying said slave device, which bits (bits respective positions) among said predefined quantity of bits are included in said signalling information, e.g. the so-called less significant bits (as denominated by the one skilled in the art). Informing about the quantity of bits used to by the slave device to provide information identifying said slave device may be done using field delimiters or by relying on a field with predefined size and position. In a variant, the quantity of bits used to by the slave device to provide information identifying said slave device is predefined and known in advance by the master device 110. For instance, the signalling information contains information about the type of signalling information and one type of signalling information is defined for including a full device identifier and another type of signalling information is defined for including such a partial device identifier.

When each slave device is supposed to include its full identifier in announcing signalling information, the step S303 is omitted and the algorithm directly moves from the step S301 to the step S306. On the contrary, when each slave device is supposed to include a part only of its full identifier in announcing signalling information, the step S303 is omitted and the algorithm directly moves from the step S303 to the step S306.

In the step S303, the master device 110 compares said part of the identifier, as received in the announcing signalling information, with stored identifying information. Said stored identifying information concerns is a list, or a table, or more generally a database, of full or partial identifiers of each slave device that is known, by the master device 110, likely to concurrently access the out-of-band communication channel, and at least the of each slave device that is known, by the master device 110, likely to concurrently access the out-of-band communication channel with regard to the slave device having transmitted the announcing signalling information received in the step S301 - *e.g.* the slave devices known, by the master device 110, to be already present in the concerned PON. In other words, the master device 110 checks whether said part of the identifier, as received in the announcing signalling information, matches said full or partial identifiers stored in said database. The comparison is performed with respect to the position of the bits of said part of the identifier included in the announcing signalling information among said predefined quantity of bits used to represent the full identifiers of the slave devices.

As detailed hereafter, said database can be updated according to appearance or disappearance of slave devices within the passive optical communications network 100. As already mentioned, the slave devices likely to be present in the passive optical communications network 100 may known, by configuration, by the master device 110. It therefore means that said database may be updated by the operator of the passive optical communications network 100 upon installation and update of the passive optical communications network 100.

In a following step S304, the master device 110 checks whether said part of the identifier, as received in the announcing signalling information, is sufficient to discriminate the slave device, which has transmitted said announcing signalling information, from each slave device likely to concurrently access the out-of-band communication channel with regard to the slave device having transmitted the announcing signalling information. When the comparison performed in the step S303 shows that said part of the identifier matches at least one of the full or partial identifiers stored in the database, the quantity of bits forming said part of the identifier, as received in the announcing signalling information, is not sufficient to perform such discrimination. The master device 110 would therefore need to get extended identifier information or another part of the full identifier of said slave device in order to be able to distinguish said slave device from the other slave devices likely to concurrently access the out-of-band communication channel with regard to the slave device having transmitted said announcing signalling information. When said part of the identifier, as received in the announcing signalling information, is sufficient to perform the discrimination, the step S306 is performed; otherwise, a step S305 is performed.

In the step S305, the master device 110 requests, to the slave device that has transmitted the announcing signalling information received in the step S301, further identifying information, since the part of the identifier, as received in the announcing signalling information, is not sufficient to perform the discrimination. The request may implicitly or explicitly indicate which bits of the full identifier of said slave device are requested: according to a first example, the request implicitly indicates that the slave device shall reattempt transmitting the announcing signalling information but with all the bits of the full identifier of said slave device; according to a second example, the request implicitly or explicitly indicates that the slave device shall reattempt transmitting the announcing signalling information with a predefined supplementary quantity of bits of the full identifier of said slave device, *e.g.* double the quantity *B* of bits of the part of the identifier as received in the announcing signalling information, for instance such that the *2*B* less significant bits of the full identifier of said slave device are transmitted. The algorithm of Fig. 3 is then expected to be reiterated when receiving a new announcing signalling information from said slave device in response to the request transmitted by the master device 110 in the step S305.

According to a particular embodiment, the master device 110 builds said request such that said request explicitly indicates which bits of the full identifier said slave device is expected to include in the new announcing signalling information in response to the request transmitted by the master device 110 in the step S305. Indeed, the master device 110 is able to determine which identifier bits allow discriminating the slave devices already present in the concerned PON from each other. The probability is rather high that said bits further allow discriminating the slave device, which has transmitted the announcing signalling information received in the step S301, from the slave devices already present in the concerned PON. Therefore, the master device 110 may build said request such that said request explicitly indicates that said slave device shall include said bits in the new announcing signalling information to be transmitted in response to the request transmitted by the master device 110 in the step S305.

Once the step S305 is performed, the algorithm of Fig. 5 ends.

In the step S306, the master device 110 stores in the database the full identifier as received in the step S301, or the part of the full identifier as received in the step S301, according to whichever is effectively received in the step S301. The full identifier or identifier part stored in the database allows then to identify the slave device, which has transmitted the announcing signalling information received in the step S301, from the other slave devices likely to concurrently access the out-of-band communication channel with regard to the slave device having transmitted the announcing signalling information received in the step S301.

In a following step S307, the master device 110 determines discriminating bits that enable discriminating any and all slave devices likely to concurrently access the out-of-band communication channel with regard to the slave device having transmitted the announcing signalling information received in the step S301 from each other. In other words, the master device 110 determines which identifier bits (*i.e.* bits respective positions among the quantity of bits needed to represent the full identifiers of the slave devices) are strictly necessary to be transmitted during further signalling information transmission to determine which slave device has transmitted said signalling information.

Then in a step S308, the master device 110 determines a mask and implicitly at least one shift depth (related to the positions of the bits to quote from the full identifiers), which enable to retain only said discriminating bits from the full identifiers of the slave devices likely to concurrently access the out-of-band communication channel with regard to the slave device having transmitted the announcing signalling information received in the step S301. The mask enables extracting the values of the discriminating bits and the shift depth(s) enable(s) obtaining said values in a contiguous way starting from the first bit position (as if said bits were the so-called less significant bits). Let's illustratively consider that the discriminating bits are the bits from the fifth bit position to the eighth bit position (the first bit position being the so-called least significant bit of the identifier), said mask enables extracting the respective values of said bits from a full identifier onto which the mask is applied, and one shift depth enables shifting said extracted bits to a range going from the first bit position to the fourth bit position. It has to be noted that several shift depths are used when the mask enables extracting the values of non contiguous discriminating bits, so as to obtain, after shifting operations in accordance with said shifting depths, values of contiguous bits starting from the first bit position.

Once the mask and implicitly the shift depth(s) are determined, the master device 110 transmits information representative of said mask and shift depth(s), via the out-of-band communication channel or using the in-band communication channel, at least toward the slave device that transmitted the announcing signalling information received in the step S301. In case the obtained mask differs from a preceding mask that was applicable to the slave devices that were already present in the concerned PON, the master device 110 broadcast an updated mask to the slave devices, which is therefore applicable to all said slave devices. The terminology "broadcast" is used herein with its broad meaning of contacting all the slave devices.

To transmit data via the out-of-band communication channel toward the slave device having transmitted the announcing signalling information received in the step S301, the master device 110 uses a carrier frequency that is a downlink carrier frequency matching the nominal frequency of the downlink filter of the set 121 paired with the nominal frequency of the uplink filter of the set 122 that the carrier frequency used for transmitting said announcing signalling signal matches (since communications between the master device 110 and the concerned slave devices occur within a single PON).

Then, the master device 110 processes any other piece of signalling information that is contained, if any, in the announcing signalling information received in the step S301. Once the step S308 is performed, the algorithm of Fig. 3 ends.

The transmission of the mask has been more particularly described with regard to Fig. 3 in response to an announcing signalling information transmitted by each slave device joining the passive optical communications network 100. The mask may be also transmitted by the master device 110 on a regular basis, using either the out-of-band communication channel, or the in-band communications channel, in the downlink direction. This latter approach allows slave devices to know which identifier bits to include in their announcing signalling information when said slave devices join the passive optical communications network 100. In another approach, the mask may be also transmitted by the master device 110, using either the out-of-band communication channel, or the in-band communications channel, in the downlink direction, upon change, *e.g.* by the operator of the passive optical communications network 100, in the database listing the slave devices likely to concurrently access the out-of-band communication channel.

**Fig. 4** schematically represents an algorithm, performed by each slave device joining the passive optical communications network 100 (*i.e.* announcing its presence in the passive optical communications network 100 to the master device 110), for transmitting announcing signalling information via the out-of-band communication channel. Let's illustratively consider that the algorithm of Fig. 4 is performed by the slave device 141.

In a step S401, the slave device 141 obtains at least a part of the identifier of the slave device 141, to be transmitted within such an announcing signalling information via the out-of-band communication channel to the master device 110. To do so, the slave device 141 quotes a predefined quantity of bits, the respective positions of which being predefined, from the full identifier of the slave device 141. Only the quoted bits are about to be transmitted in the announcing signalling information for identifying the slave device 141. In a variant, the slave device 141 may include in the announcing signalling information the full identifier of the slave device 141.

The quantity of bits quoted from the full identifier of the slave device 141, and their respective positions, are typically predefined. For instance, a default mask and implicitly at least one default shift depth are stored in memory of the slave device 141 during manufacturing or at initialisation of the slave device 141, and are applied (as described above) by the slave device 141 in the step S401. Only the quoted bits are then retained as identifying information representative of the slave device 141 in said announcing signalling information. At this stage, the slave device 141 is not able to know whether the quoted bits would be sufficient to discriminate said slave device 141 from the other slave devices likely to concurrently access the out-of-band communication channel with regard to the slave device 141. This is up to the master device 110 to determine whether the quoted bits would be sufficient to discriminate said slave device 141 from the other slave devices likely to concurrently access the out-of-band communication channel with regard to the slave device having transmitted the announcing signalling information received in the step S301, as already explained with regard to Fig. 3. Indeed, if the master device 110 determines that the quoted bits are sufficient to discriminate said slave device 141 from the other slave devices likely to concurrently access the out-of-band communication channel with regard to the slave device 141, said slave device 141 is supposed to receive, at least, a mask, from the master device 110, in response to the announcing signalling information; otherwise, the said slave device 141 is supposed to receive a request for further identifying information, from the master device 110, in response to the announcing signalling information.

In another embodiment, the quantity of bits quoted from the full identifier of the slave device 141, and their respective positions, are determined from a mask transmitted by the master device 110 using either the out-of-band communication channel in the downlink direction or the in-band communications channel in the downlink direction. Said mask has been defined by the master device 110 from the identifiers of the slave devices known by the slave device as already present in the concerned PON, so as to enable distinguishing said slave devices from each other. Said mask might need to be updated by the master device 110 due to appearance in the passive optical communications network 100 of the slave device 141, but there is a non negligible probability that the mask already applicable would remain applicable to distinguish the slave device 141 from the other slave devices likely to concurrently access the out-of-band communication channel.

In a following step S402, the slave device 141 transmits, toward the master device 110 via the out-of-band communication channel, the announcing signalling information including the full identifier or part of the full identifier as identifying information, according to whichever was obtained in the step S401.

When the announcing signalling information includes a part only of the full identifier, a step S403 is performed; otherwise, a step S404 is directly performed.

In the step S403, the slave device 141 checks whether the identifying information included in the announcing signalling information has been sufficient for the master device 110 to discriminate the slave device 141 from the other slave devices likely to concurrently access the out-of-band communication channel with regard to the slave device 141. In other words, the slave device 141 checks whether the master device 110 transmitted, in response to the announcing signalling information, a request for further identifying information or, at least, a mask. When the slave device 141 received from the master device 110, in response to the announcing signalling information, a request for further identifying information, a step S406 is performed; otherwise, the step S404 is performed.

In the step S404, the slave device 141 receives information representative of a mask and at least one shift depth, which enable to retain only, from the full identifier of the slave device 141, discriminating bits allowing discriminating the slave device 141 from the slave devices likely to concurrently access the out-of-band communication channel with regard to the slave device 141. Said information representative of the mask and the shift depth(s) corresponds to the one transmitted by the master device 110 in the step S308. The slave device 141 is thus able to determine, from the full identifier of the slave device 141 and from said mask and from said shift depth(s), a discriminating reduced identifier allowing discriminating the slave device 141 from the slave devices likely to concurrently access the out-of-band communication channel with regard to the slave device 141, as already explained with regard to Fig. 3. Only the discriminating bits are thus retained as identifying information representative of the slave device 141 in said further signalling information.

In a following step S405, the slave device 141 uses said discriminating reduced identifier, as identifying information, in further signalling information to be transmitted via the out-of-band communication channel. The discriminating reduced identifier is then, by definition, supposed to allow the master device 110 knowing that said further signalling information comes from the slave device 141, and said further signalling information is shorter than if said further signalling information would have contained the full identifier of the slave device 141, which therefore reduces the risk of collision occurrences via the out-of-band communication channel. The algorithm of Fig. 4 then ends.

In the step S406, the slave device 141 obtains further identifying information compared with the part of the full identifier included in the announcing signalling information transmitted in the step S402. The request for further identifying information received from the master device 110 may implicitly or explicitly indicate which bits of the full identifier of said slave device are requested: according to the first example already mentioned with regard to the step S305, the request implicitly indicates that the slave device shall reattempt transmitting the announcing signalling information but with all the bits of the full identifier of said slave device; according to the second example already mentioned with regard to the step S305, the request implicitly or explicitly indicates that the slave device 141 shall reattempt transmitting the announcing signalling information with a predefined supplementary quantity of bits of the full identifier of the slave device 141, *e.g.* double the quantity *B* of bits of the part of the identifier as received in the announcing signalling information, for instance such that the *2*B* less significant bits of the full identifier of said slave device are transmitted. Said predefined supplementary quantity of bits of the full identifier of the slave device 141 may be only known by the slave device 141 (the request indicates that more bits are requested without indicating how many, and the slave device 141 decides on its own how many supplementary bits to provide, *e.g.* on the basis of a default value stored in memory during manufacturing or at initialisation).

In a following step S407, the slave device 141 transmits, toward the master device 110 via the out-of-band communication channel, a new announcing signalling information including the full identifier or part of the full identifier as further identifying information as obtained in the step S406, according to whichever was implicitly or explicitly requested by the master device 110. Then the step S403 is repeated.

If after having transmitted the announcing signalling information in the step S402, the slave device 141 doesn't receive any response (*e.g*. either a mask or a request for further identifying information), the slave device 141 modifies the configuration of its optical transmission interface so as to use another carrier wavelength. This process is repeated until the carrier wavelength used by the slave device 141 matches the passband of the uplink filter of the set 122 enabling the slave device 141 to transmit data to the master device 110.

**Fig. 5** schematically represents an algorithm, performed by each slave device, for transmitting signalling information (other than the aforementioned announcing signalling information) via the out-of-band communication channel. Let's illustratively consider that the algorithm of Fig. 5 is performed by the slave device 141.

In a step S501, the slave device 141 detects that signalling information (further signalling information with regard to the aforementioned announcing signalling information) has to be transmitted via the out-of-band communication channel toward the master device 110. For instance, such further signalling information is a locking signal for carrier wavelength detuning tracking, enabling the master device 110 to perform measurements onto said locking signal in order to determine whether the configuration of the optical transmission interface of the slave device 141 has to be adjusted so as to correspond to a carrier wavelength that matches the passband of the filter of the set 122 via which the slave device 141 is supposed to communicate toward the master device 110.

In a following step S502, the slave device 141 obtains information representative of a mask for obtaining a discriminating reduced identifier from the full identifier of the slave device 141. Said mask is the one for which information representative thereof was transmitted by the master device 110 to the slave device 141 (possibly via broadcast) in the step S308 (which means that said mask has been received by the slave device 141 following a processing of announcing signalling information transmitted by another slave device having joined the passive optical communications network 100 after said slave device 141). The slave device 141 then applies said mask and corresponding shift depth(s) so as to obtain contiguous bits from the first bit position (as if all these bits were the so-called less significant bits). Only the bits corresponding to the discriminating reduced identifier are kept as identifying information to be included in said further signalling information.

In a following step S503, the slave device 141 builds said further signalling information, in which the slave device 141 includes the discriminating reduced identifier as obtained in the step S502.

In a following step S504, the slave device 141 transmits, toward the master device 110 via the out-of-band communication channel, said further signalling information. Then the algorithm of Fig. 5 ends.

**Fig. 6** schematically represents an algorithm, performed by the master device 110, for processing said further signalling information transmitted via the out-of-band communication channel according to the algorithm of Fig. 5.

In a step S601, the master device 110 receives said further signalling information, including a part only (discriminating reduced identifier) of the full identifier of the slave device having transmitted said further signalling information. In case said further signalling information includes the full identifier of the slave device having transmitted said further signalling information, a step S605 is directly performed.

In a following step S602, the master device 110 obtains identifying information included said further signalling information and aiming at identifying the slave device having transmitted said further signalling information in a unique way among the slave devices likely to concurrently access the out-of-band communication channel with regard to the slave device having transmitted the announcing signalling information received in the step S301.

In a following step S603, the master device 110 identifies the slave device having transmitted said further signalling information from the identifying information obtained in the step S602.

In a following step S604, the master device 110 processes any other piece of signalling information that is contained in said further signalling information received in the step S301. Once the step S604 is performed, the algorithm of Fig. 6 ends.

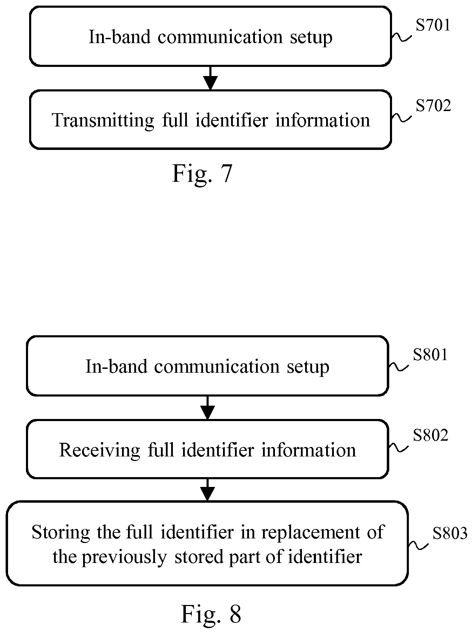

**Fig. 7** schematically represents an algorithm, performed by each slave device, for transmitting identifying information via an in-band communication, in a particular embodiment of the invention in which the announcing signalling information received beforehand respectively contain only partial identifiers. Indeed, it is advantageous that the master device 110 stores in the database full identifiers of the slave devices instead of only partial identifiers of slave devices, since the mask used for extracting discriminating bits relies on identifying information stored in the database of the master device 110 with regard to the slave devices, and since such a mask is likely to evolve over time according to appearance or disappearance of slave devices, in/from the passive optical communications network 100. According to a first embodiment, disappearance can be detected by the master device 110 thanks to a message transmitted by the concerned slave device right before powering down, or right before moving into sleep mode, to indicate that said slave device leaves the passive optical communications network 100. According to a second embodiment, disappearance can be detected by implementing a timer of predefined duration, activating each time there is a data exchange between the master device and said slave device, and by considering that the slave device left the passive optical communications network 100 when the timer expires before having performed a new data exchange between the master device and said slave device. It means that such exchanges are supposed to usually occur more frequently than said predefined duration of the timer.

Let's illustratively consider that the algorithm of Fig. 7 is performed by the slave device 141.

In a step S701, the slave device 141 sets up in-band communications with the master device 110. In-band communications are set up once the carrier frequency used by the slave device 141 matches the passband of the filter of the set 122 via which the slave device 141 is supposed to communicate toward the master device 110, and once the slave device 141 and the master device 110 have exchanged, via the out-of-band communication channel, signalling information useful for setting up said in-band communications, e.g. related to modulation scheme to be used within said in-band communications and/or related to time division multiplex for performing the in-band communications.

In a following step S702, the slave device 141 transmits its full identifier to the master device 110 via the in-band communications, by fulfilling the in-band communications requirements. The in-band communications being far faster than the communications via the out-of-band communications, bandwidth consumption is less problematic in the scope of the in-band communications than in the scope of the communications via the out-of-band communications. The master device 110 is then able to complete identifying information regarding the slave device 141, as detailed hereafter with regard to Fig. 8.

**Fig. 8** schematically represents an algorithm, performed by the master device 110, for processing identifying information received via said in-band communication. The algorithm of Fig. 8 is performed, by the master device 110, in conjunction with the algorithm of Fig. 7, which is performed by each slave device.

In a step S801, the master device sets up in-band communications with one slave device, such as the slave device 141. In-band communications are set up once the carrier frequency used by said slave device matches the passband of the filter of the set 122 via which said slave device is supposed to communicate toward the master device 110, and once said slave device and the master device 110 have exchanged, via the out-of-band communication channel, signalling information useful for setting up said in-band communications, e.g. related to modulation scheme to be used within said in-band communications and/or related to time division multiplex for performing the in-band communications.

In a following step S802, the master device 110 receives, from said slave device, the full identifier of said slave device via the in-band communications.

In a following step S803, the master device 110 retrieves from the database the previously stored partial identifier for said slave device. To do so, the master device 110 applies the mask applicable to said slave device onto the full identifier received in the step S802, and performs the necessary shifting operations, and performs a comparison with the partial identifiers stored in the database. Once a match is found, the partial identifier of said slave device is found, and the master device 110 stores said full identifier in replacement of the partial identifier previously stored.

In the description above, the usage of the aforementioned mask so as to determine the reduced identifying information for each slave device is detailed in a dynamic update context according to appearance of slave devices in the passive optical communications network 100. The same principles would apply in a dynamic update context according to disappearance of slave devices from the passive optical communications network 100. The mask might then be updated upon detecting said disappearance, which may reduce the quantity of identifier bits strictly needed to distinguish the slave devices likely to concurrently access the out-of-band communication channel.

## Claims

1. A method for transmitting signalling information via an out-of-band communication channel in an optical communications network (100) comprising a master device (110) and slave devices (141, 142, 143) connected to the master device via optical fiber, the signalling information containing identifying information aiming at identifying the slave device transmitting said signalling information, the optical communications network being adapted to enable in-band communications, the out-of-band communication channel being intended to enable transmissions of said signalling information with respect to the in-band communications, collisions occurring in the out-of-band communication channel when plural slave devices access the out-of-band communication channel by using respective carrier wavelengths that match each other, wherein the master device transmits (S308), to each slave device likely to concurrently access the out-of-band communication channel, information representative at least of a mask that said slave devices has to apply to respective full identifiers of said slave devices so as to obtain respective reduced identifying information to be used (S405) by said slave devices within further signalling information to be respectively transmitted by said slave devices, the reduced identifying information for each slave device aiming at containing enough bits according to said mask to enable distinguishing said slave device from the other slave devices likely to concurrently access the out-of-band communication channel,
wherein the master device further receives (S301), via the out-of-band communication channel, a so-called announcing signalling information, and the master device transmits (S308) said information representative at least of said mask, in response to said announcing signalling information,
wherein, when the identifying information contained in said announcing signalling information enables discriminating said slave device from other slave devices likely to concurrently access the out-of-band communication channel, the master device stores (S306) said identifying information,
and wherein when the in-band communications are setup from said slave device to said master device, the master device receives (S802) the full identifier of slave device within said in-band communications and replaces (S803) the stored identifying information by the full identifier of said slave device.

2. The method according to claim 1, **characterized in that** the master device performs, upon receiving said announcing signalling information:
- determining (S304) whether the identifying information contained in said announcing signalling information enables discriminating said slave device from other slave devices likely to concurrently access the out-of-band communication channel;
- transmitting (S308) the information representative at least of said mask when said identifying information contained in said announcing signalling information enables discriminating said slave device from other slave devices likely to concurrently access the out-of-band communication channel; and
- transmitting (S305), otherwise, a request to transmit a new announcing signalling information containing further identifying information.

3. The method according to claim 2, **characterized in that** said request explicitly indicates which bits of its full identifier said slave device is expected to include in the new announcing signalling information.

4. The method according to any one of claims 1 to 3, **characterized in that**, when said mask transmitted in response to said announcing signalling information differs from a preceding mask that was applicable to the slave devices that were already known by the master device to be likely to concurrently access the out-of-band communication channel with regard to the slave device having transmitted said announcing signalling information, the master device broadcasts (S308) an updated mask to the slave devices, which is applicable to all said slave devices likely to concurrently access the out-of-band communication channel.

5. A method for transmitting signalling information via an out-of-band communication channel in an optical communications network (100) comprising a master device (110) and slave devices (141, 142, 143) connected to the master device via optical fiber, the signalling information containing identifying information aiming at identifying the slave device transmitting said signalling information, the optical communications network being adapted to enable in-band communications, the out-of-band communication channel being intended to enable transmissions of said signalling information with respect to the in-band communications, collisions occurring in the out-of-band communication channel when plural slave devices access the out-of-band communication channel by using respective carrier wavelengths that match each other, wherein each slave device receives (S404), from the master device, information representative at least of a mask that said slave device has to apply to a full identifier of said slave device so as to obtain reduced identifying information to be used (S405; S503) by said slave device within further signalling information to be transmitted (S504) by said slave device, the reduced identifying information aiming at containing enough bits according to said mask to enable distinguishing said slave device from the other slave devices likely to concurrently access the out-of-band communication channel,
wherein each slave device further transmits, via the out-of-band communication channel, a so-called announcing signalling information, and each slave device receives said information representative at least of said mask, in response to said announcing signalling information,
and wherein, when the in-band communications are setup from one said slave device to said master device, said slave device transmits (S802) the full identifier of said slave device within said in-band communications so as to enable the master device replacing (S803) identifying information that enables discriminating said slave device from other slave devices likely to concurrently access the out-of-band communication channel and that was then previously stored by the master device, by the full identifier of said slave device.

6. A method for transmitting signalling information via an out-of-band communication channel in an optical communications network (100) comprising a master device (110) and slave devices (141, 142, 143) connected to the master device via optical fiber, **characterized in that** the master device implements the method according to any one of claims 1 to 4, and each slave device implements the method according to claim 5.

7. The method according to claim 6, **characterized in that** an optical transmission interface of said slave device has to be adjusted for transmitting optical signals to the master device via an optical band-pass filter (122), the master device having an optical reception interface configured to enable receiving optical signals output by said optical band-pass filter and transmitted by said slave device on a carrier wavelength when said carrier wavelength is comprised in the passband of the optical band-pass filter, said carrier wavelength being *a priori* unknown and/or said passband of the optical band-pass filter being *a priori* unknown, and wherein said signalling information is used to lock said carrier wavelength with respect to said passband of the optical band-pass filter.

8. A computer program comprising program code instructions which can be loaded in a programmable device for implementing the method according to any one of claims 1 to 4, or according to claim 5, when the program code instructions are run by the programmable device.

9. An information storage medium storing a computer program comprising program code instructions which can be loaded in a programmable device for implementing the method according to any one of claims 1 to 4, or according to claim 5, when the program code instructions are run by the programmable device.

10. A master device (110) adapted to receive signalling information via an out-of-band communication channel in an optical communications network (100) further comprising slave devices (141, 142, 143) connected to the master device via optical fiber, the signalling information containing identifying information aiming at identifying the slave device transmitting said signalling information, the optical communications network being adapted to enable in-band communications, the out-of-band communication channel being intended to enable transmissions of said signalling information with respect to the in-band communications, collisions occurring in the out-of-band communication channel when plural slave devices access the out-of-band communication channel by using respective carrier wavelengths that match each other, wherein the master device implements means for transmitting (S308), to each slave device likely to concurrently access the out-of-band communication channel, information representative at least of a mask that said slave devices have to apply to respective full identifiers of said slave devices so as to obtain respective reduced identifying information to be used (S405) by said slave devices within further signalling information to be respectively transmitted by said slave devices, the reduced identifying information for each slave device aiming at containing enough bits according to said mask to enable distinguishing said slave device from the other slave devices likely to concurrently access the out-of-band communication channel,
wherein the master device further implements means for receiving (S301), via the out-of-band communication channel, a so-called announcing signalling information, and means for transmitting (S308) said information representative at least of said mask, in response to said announcing signalling information,
wherein, when the identifying information contained in said announcing signalling information enables discriminating said slave device from other slave devices likely to concurrently access the out-of-band communication channel, the master device implements means for storing (S306) said identifying information,
and wherein when the in-band communications are setup from said slave device to said master device, the master device implements means for receiving (S802) the full identifier of slave device within said in-band communications and means for replacing (S803) the stored identifying information by the full identifier of said slave device.

11. A slave device (141) adapted to transmit signalling information via an out-of-band communication channel in an optical communications network (100) further comprising a master device (110) and other slave devices (142, 143) also connected to the master device via optical fiber, the signalling information containing identifying information aiming at identifying the slave device transmitting said signalling information, the optical communications network being adapted to enable in-band communications, the out-of-band communication channel being intended to enable transmissions of said signalling information with respect to the in-band communications, collisions occurring in the out-of-band communication channel when plural slave devices access the out-of-band communication channel by using respective carrier wavelengths that match each other, wherein said slave device implements means for receiving (S404), from the master device, information representative at least of a mask that said slave device has to apply to a full identifier of said slave device so as to obtain reduced identifying information to be used (S405; S503) by said slave device within further signalling information to be transmitted (S504) by said slave device, the reduced identifying information aiming at containing enough bits according to said mask to enable distinguishing said slave device from the other slave devices likely to concurrently access the out-of-band communication channel,
wherein said slave device further implements means for transmitting, via the out-of-band communication channel, a so-called announcing signalling information, and said slave device receives said information representative at least of said mask, in response to said announcing signalling information,
and wherein, when the in-band communications are setup from said slave device to said master device, said slave device implements means for transmitting (S802) the full identifier of said slave device within said in-band communications so as to enable the master device replacing (S803) identifying information that enables discriminating said slave device from other slave devices likely to concurrently access the out-of-band communication channel and that was then previously stored by the master device, by the full identifier of said slave device.

12. A system adapted to transmit signalling information via an out-of-band communication channel in an optical communications network (100), **characterized in that** the system comprises the master device (110) according to claim 10 and a plurality of slave devices (141, 142, 143) according to claim 11, the slave devices being connected to the master device via optical fiber.

13. The system according to claim 12, **characterized in that** an optical transmission interface of said slave device has to be adjusted for transmitting optical signals to the master device via an optical band-pass filter (122), the master device having an optical reception interface configured to enable receiving optical signals output by said optical band-pass filter and transmitted by said slave device on a carrier wavelength when said carrier wavelength is comprised in the passband of the optical band-pass filter, said carrier wavelength being *a priori* unknown and/or said passband of the optical band-pass filter being *a priori* unknown, and wherein said signalling information is used to lock said carrier wavelength with respect to said passband of the optical band-pass filter.

## Patentansprüche

1. Verfahren zum Senden von Signalisierungsinformation über einen Außerband-Kommunikationskanal in einem optischen Kommunikationsnetzwerk (100), das eine Master-Vorrichtung (110) und mit der Master-Vorrichtung über Glasfaser verbundene Slave-Vorrichtungen (141, 142, 143) umfasst, wobei die Signalisierungsinformation Identifizierungsinformation enthält, die auf ein Identifizieren der die Signalisierungsinformation sendenden Slave-Vorrichtung abzielt, wobei das optische Kommunikationsnetzwerk dazu geeignet ist, Kommunikationen innerhalb des Bandes zu ermöglichen, wobei beabsichtigt ist, dass der Außerband-Kommunikationskanal Sendungen der Signalisierungsinformation in Bezug auf die Kommunikationen innerhalb des Bandes ermöglicht, wobei Kollisionen im Außerband-Kommunikationskanal auftreten, wenn mehrere Slave-Vorrichtungen auf den Außerband-Kommunikationskanal unter Verwendung jeweiliger Trägerwellenlängen zugreifen, die miteinander übereinstimmen, wobei die Master-Vorrichtung zu jeder Slave-Vorrichtung, die wahrscheinlich gleichzeitig auf den Außerband-Kommunikationskanal zugreifen, Information sendet (S308), die wenigstens eine Maske darstellt, die die Slave-Vorrichtung auf jeweilige vollständige Identifizierer der Slave-Vorrichtungen anwenden muss, um jeweilige reduzierte Identifizierungsinformation zu erhalten, um durch die Slave-Vorrichtungen zu verwendende (S405) verwendet zu werden, innerhalb weiterer Signalisierungsinformation, um jeweils durch die Slave-Vorrichtungen gesendet zu werden, wobei die reduzierte Identifizierungsinformation für jede Slave-Vorrichtung auf ein Enthalten von genügend Bits gemäß der Maske abzielt, um ein Unterscheiden der Slave-Vorrichtung von den anderen Slave-Vorrichtungen zu ermöglichen, die wahrscheinlich gleichzeitig auf den Außerband-Kommunikationskanal zugreifen,
wobei die Master-Vorrichtung über den Außerband-Kommunikationskanal weiterhin eine sogenannte Ankündigungs-Signalisierungsinformation empfängt (S301) und die Master-Vorrichtung die Information, die wenigstens die Maske darstellt, in Antwort auf die Ankündigungs-Signalisierungsinformation sendet (S308),
wobei dann, wenn die in der Ankündigungs-Signalisierungsinformation enthaltene Identifizierungsinformation ein Unterscheiden der Slave-Vorrichtung von anderen Slave-Vorrichtungen, die wahrscheinlich gelichzeitig auf den Außerband-Kommunikationskanal zugreifen, ermöglicht, die Master-Vorrichtung die Identifizierungsinformation speichert (S306),
und wobei dann, wenn die Kommunikationen innerhalb des Bandes von der Slave-Vorrichtung zur Master-Vorrichtung eingerichtet sind, die Master-Vorrichtung den vollständigen Identifizierer einer Slave-Vorrichtung innerhalb der Kommunikationen innerhalb des Bandes empfängt (S802) und die gespeicherte Identifizierungsinformation durch den vollständigen Identifizierer der Slave-Vorrichtung ersetzt (S803).

2. Verfahren nach Anspruch 1, **dadurch gekennzeichnet, dass** die Master-Vorrichtung auf ein Empfangen der Ankündigungs-Signalisierungsinformation hin folgendes durchführt:
- Bestimmen (S304), ob die in der Ankündigungs-Signalisierungsinformation enthaltene Identifizierungsinformation ein Unterscheiden der Slave-Vorrichtung von anderen Slave-Vorrichtungen, die wahrscheinlich gleichzeitig auf den Außerband-Kommunikationskanal zugreifen, ermöglicht;
- Senden (S308) der Information, die wenigstens die Maske darstellt, wenn die in der Ankündigungs-Signalisierungsinformation enthaltene Identifizierungsinformation ein Unterscheiden der Slave-Vorrichtung von anderen Slave-Vorrichtungen, die wahrscheinlich gleichzeitig auf den Außerband-Kommunikationskanal zugreifen, ermöglicht; und
- sonst Senden (S305) einer Anfrage, eine neue Ankündigungs-Signalisierungsinformation zu senden, die weitere Identifizierungsinformation enthält.

3. Verfahren nach Anspruch 2, **dadurch gekennzeichnet, dass** die Anfrage explizit anzeigt, für welche Bits ihres vollständigen Identifizierers für die Slave-Vorrichtung erwartet wird, dass sie in der neuen Ankündigungs-Signalisierungsinformation enthalten sind.

4. Verfahren nach einem der Ansprüche 1 bis 3, **dadurch gekennzeichnet, dass** dann, wenn die in Antwort auf die Ankündigungs-Signalisierungsinformation gesendete Maske sich von einer vorangehenden Maske unterscheidet, die auf die Slave-Vorrichtungen anwendbar war, die für die Master-Vorrichtung bereits dafür bekannt waren, dass sie wahrscheinlich gleichzeitig auf den Außerband-Kommunikationskanal zugreifen, und zwar in Bezug auf die Slave-Vorrichtung, die die Ankündigungs-Signalisierungsinformation gesendet hat, die Master-Vorrichtung eine upgedatete Maske zu den Slave-Vorrichtungen rundsendet (S308), die auf alle Slave-Vorrichtungen anwendbar ist, die wahrscheinlich gleichzeitig auf den Außerband-Kommunikationskanal zugreifen.

5. Verfahren zum Senden von Signalisierungsinformation über einen Außerband-Kommunikationskanal in einem optischen Kommunikationsnetzwerk (100), das eine Master-Vorrichtung (110) und mit der Master-Vorrichtung über Glasfaser verbundene Slave-Vorrichtungen (141, 142, 143) umfasst, wobei die Signalisierungsinformation Identifizierungsinformation enthält, die auf ein Identifizieren der die Signalisierungsinformation sendenden Slave-Vorrichtung abzielt, wobei das optische Kommunikationsnetzwerk dazu geeignet ist, Kommunikationen innerhalb des Bandes zu ermöglichen, wobei beabsichtigt ist, dass der Außerband-Kommunikationskanal Sendungen der Signalisierungsinformation in Bezug auf die Kommunikationen innerhalb des Bandes ermöglicht, wobei Kollisionen im Außerband-Kommunikationskanal auftreten, wenn mehrere Slave-Vorrichtungen auf den Außerband-Kommunikationskanal unter Verwendung jeweiliger Trägerwellenlängen zugreifen, die miteinander übereinstimmen, wobei jede Slave-Vorrichtung von der Master-Vorrichtung Information empfängt (S404), die wenigstens eine Maske darstellt, die die Slave-Vorrichtung auf einen vollständigen Identifizierer der Slave-Vorrichtung anwenden muss, um reduzierte Identifizierungsinformation zu erhalten, um durch die Slave-Vorrichtung verwendet (S405; S503) zu werden, und zwar innerhalb weiterer Signalisierungsinformation, um durch die Slave-Vorrichtung gesendet (S504) zu werden, wobei die reduzierte Identifizierungsinformation darauf abzielt, genügend Bits gemäß der Maske zu enthalten, um ein Unterscheiden der Slave-Vorrichtung von den anderen Slave-Vorrichtungen zu ermöglichen, die wahrscheinlich gelichzeitig auf den Außerband-Kommunikationskanal zugreifen,
wobei jede Slave-Vorrichtung weiterhin über den Außerband-Kommunikationskanal eine sogenannte Ankündigungs-Signalisierungsinformation sendet und jede Slave-Vorrichtung die Information, die wenigstens die Maske darstellt, in Antwort auf die Ankündigungs-Signalisierungsinformation empfängt,
und wobei dann, wenn die Kommunikationen innerhalb des Bandes von einer der Slave-Vorrichtungen zur Master-Vorrichtung eingerichtet sind, die Slave-Vorrichtung den vollständigen Identifizierer der Slave-Vorrichtung innerhalb der Kommunikationen innerhalb des Bandes sendet (S802), um zu ermöglichen, dass die Master-Vorrichtung Identifizierungsinformation, die ein Unterscheiden der Slave-Vorrichtung von anderen Slave-Vorrichtungen, die wahrscheinlich gelichzeitig auf den Außerband-Kommunikationskanal zugreifen, ermöglicht und die dann zuvor durch die Master-Vorrichtung gespeichert wurde, durch den vollständigen Identifizierer der Slave-Vorrichtung ersetzt (S803).

6. Verfahren zum Senden von Signalisierungsinformation über einen Außerband-Kommunikationskanal in einem optischen Kommunikationsnetzwerk (100), das eine Master-Vorrichtung (110) und mit der Master-Vorrichtung über Glasfaser verbundene Slave-Vorrichtungen (141, 142, 143) umfasst, **dadurch gekennzeichnet, dass** die Master-Vorrichtung das Verfahren nach einem der Ansprüche 1 bis 4 implementiert und jede Slave-Vorrichtung das Verfahren nach Anspruch 5 implementiert.

7. Verfahren nach Anspruch 6, **dadurch gekennzeichnet, dass** eine optische Sende-Schnittstelle der Slave-Vorrichtung zum Senden optischer Signale zur Master-Vorrichtung über ein optisches Bandpassfilter (122) eingestellt werden muss, wobei die Master-Vorrichtung eine optische Empfangs-Schnittstelle hat, die konfiguriert ist, um ein Empfangen optischer Signale zu ermöglichen, die durch das optische Bandpassfilter ausgegeben sind und durch die Slave-Vorrichtung auf einer Trägerwellenlänge gesendet sind, wenn die Trägerwellenlänge im Durchlassband des optischen Bandpassfilters umfasst ist, wobei die Trägerwellenlänge *a priori* unbekannt ist und/oder das Durchlassband des optischen Bandpassfilters *a priori* unbekannt ist, und wobei die Signalisierungsinformation verwendet wird, um die Trägerwellenlänge in Bezug auf das Durchlassband des optischen Bandpassfilters zu verriegeln.

8. Computerprogramm, das Programmcodeanweisungen umfasst, die in eine programmierbare Vorrichtung geladen werden können, zum Implementieren des Verfahrens nach einem der Ansprüche 1 bis 4 oder nach Anspruch 5, wenn die Programmcodeanweisungen durch die programmierbare Vorrichtung laufengelassen werden.

9. Informationsspeichermedium, das ein Computerprogramm speichert, das Programmcodeanweisungen umfasst, die in eine programmierbare Vorrichtung geladen werden können, zum Implementieren des Verfahrens nach einem der Ansprüche 1 bis 4 oder nach Anspruch 5, wenn die Programmcodeanweisungen durch die programmierbare Vorrichtung laufengelassen werden.

10. Master-Vorrichtung (110), die dazu geeignet ist, Signalisierungsinformation über einen Außerband-Kommunikationskanal in einem optischen Kommunikationsnetzwerk (100) zu empfangen, das weiterhin mit der Master-Vorrichtung über Glasfaser verbundene Slave-Vorrichtungen (141, 142, 143) umfasst, wobei die Signalisierungsinformation Identifizierungsinformation enthält, die auf ein Identifizieren der die Signalisierungsinformation sendenden Slave-Vorrichtung abzielt, wobei das optische Kommunikationsnetzwerk dazu geeignet ist, Kommunikationen innerhalb des Bandes zu ermöglichen, wobei beabsichtigt ist, dass der Außerband-Kommunikationskanal Sendungen der Signalisierungsinformation in Bezug auf die Kommunikationen innerhalb des Bandes ermöglicht, wobei Kollisionen im Außerband-Kommunikationskanal auftreten, wenn mehrere Slave-Vorrichtungen auf den Außerband-Kommunikationskanal unter Verwendung jeweiliger Trägerwellenlängen zugreifen, die miteinander übereinstimmen, wobei die Master-Vorrichtung Mittel zum Senden (S308) zu jeder Slave-Vorrichtung implementiert, die wahrscheinlich gleichzeitig auf den Außerband-Kommunikationskanal zugreifen, von Information, die wenigstens eine Maske darstellt, die die Slave-Vorrichtungen auf jeweilige vollständige Identifizierer der Slave-Vorrichtungen anwenden müssen, um jeweilige reduzierte Identifizierungsinformation zu erhalten, um durch die Slave-Vorrichtungen verwendet (S405) zu werden, innerhalb weiterer Signalisierungsinformation, um jeweils durch die Slave-Vorrichtungen gesendet zu werden, wobei die reduzierte Identifizierungsinformation für jede Slave-Vorrichtung auf ein Enthalten von genügend Bits gemäß der Maske abzielt, um ein Unterscheiden der Slave-Vorrichtung von den anderen Slave-Vorrichtungen zu ermöglichen, die wahrscheinlich gleichzeitig auf den Außerband-Kommunikationskanal zugreifen,
wobei die Master-Vorrichtung weiterhin Mittel implementiert zum Empfangen (S301) einer sogenannten Ankündigungs-Signalisierungsinformation über den Außerband-Kommunikationskanal und Mittel zum Senden (S308) der Information, die wenigstens die Maske darstellt, in Antwort auf die Ankündigungs-Signalisierungsinformation,
wobei dann, wenn die in der Ankündigungs-Signalisierungsinformation enthaltene Identifizierungsinformation ein Unterscheiden der Slave-Vorrichtung von anderen Slave-Vorrichtungen, die wahrscheinlich gelichzeitig auf den Außerband-Kommunikationskanal zugreifen, ermöglicht, die Master-Vorrichtung Mittel zum Speichern (S306) der Identifizierungsinformation implementiert,
und wobei dann, wenn die Kommunikationen innerhalb des Bandes von der Slave-Vorrichtung zur Master-Vorrichtung eingerichtet sind, die Master-Vorrichtung Mittel zum Empfangen (S802) des vollständigen Identifizierers einer Slave-Vorrichtung innerhalb der Kommunikationen innerhalb des Bandes implementiert und Mittel zum Ersetzen (S803) der gespeicherten Identifizierungsinformation durch den vollständigen Identifizierer der Slave-Vorrichtung.

11. Slave-Vorrichtung (141) die dazu geeignet ist, Signalisierungsinformation über einen Außerband-Kommunikationskanal in einem optischen Kommunikationsnetzwerk (100) zu senden, das weiterhin eine Master-Vorrichtung (110) und auch mit der Master-Vorrichtung über Glasfaser verbundene andere Slave-Vorrichtungen (142, 143) umfasst, wobei die Signalisierungsinformation Identifizierungsinformation enthält, die auf ein Identifizieren der die Signalisierungsinformation sendenden Slave-Vorrichtung abzielt, wobei das optische Kommunikationsnetzwerk dazu geeignet ist, Kommunikationen innerhalb des Bandes zu ermöglichen, wobei beabsichtigt ist, dass der Außerband-Kommunikationskanal Sendungen der Signalisierungsinformation in Bezug auf die Kommunikationen innerhalb des Bandes ermöglicht, wobei Kollisionen im Außerband-Kommunikationskanal auftreten, wenn mehrere Slave-Vorrichtungen auf den Außerband-Kommunikationskanal unter Verwendung jeweiliger Trägerwellenlängen zugreifen, die miteinander übereinstimmen, wobei die Slave-Vorrichtung Mittel zum Empfangen (S404), von der Master-Vorrichtung, von Information implementiert, die wenigstens eine Maske darstellt, die die Slave-Vorrichtung auf einen vollständigen Identifizierer der Slave-Vorrichtung anwenden muss, um reduzierte Identifizierungsinformation zu erhalten, um durch die Slave-Vorrichtung verwendet (S405; S503) zu werden, innerhalb weiterer Signalisierungsinformation, um durch die Slave-Vorrichtung gesendet (S504) zu werden, wobei die reduzierte Identifizierungsinformation darauf abzielt, genügend Bits gemäß der Maske zu enthalten, um ein Unterscheiden der Slave-Vorrichtung von den anderen Slave-Vorrichtungen zu ermöglichen, die wahrscheinlich gelichzeitig auf den Außerband-Kommunikationskanal zugreifen,
wobei die Slave-Vorrichtung weiterhin Mittel zum Senden einer sogenannten Ankündigungs-Signalisierungsinformation über den Außerband-Kommunikationskanal implementiert und die Slave-Vorrichtung die Information, die wenigstens die Maske darstellt, in Antwort auf die Ankündigungs-Signalisierungsinformation empfängt,
und wobei dann, wenn die Kommunikationen innerhalb des Bandes von einer der Slave-Vorrichtungen zur Master-Vorrichtung eingerichtet sind, die Slave-Vorrichtung Mittel zum Senden (802) des vollständigen Identifizierer der Slave-Vorrichtung innerhalb der Kommunikationen innerhalb des Bandes implementiert, um zu ermöglichen, dass die Master-Vorrichtung Identifizierungsinformation, die ein Unterscheiden der Slave-Vorrichtung von anderen Slave-Vorrichtungen, die wahrscheinlich gelichzeitig auf den Außerband-Kommunikationskanal zugreifen, ermöglicht und die dann zuvor durch die Master-Vorrichtung gespeichert wurde, durch den vollständigen Identifizierer der Slave-Vorrichtung ersetzt (S803).

12. System, das dazu geeignet ist, Signalisierungsinformation über einen Außenband-Kommunikationskanal in einem optischen Kommunikationsnetzwerk (100) zu senden, **dadurch gekennzeichnet, dass** das System die Master-Vorrichtung (110) nach Anspruch 10 und eine Vielzahl von Slave-Vorrichtungen (141, 142, 143) nach Anspruch 11 umfasst, wobei die Slave-Vorrichtungen mit der Master-Vorrichtung über Glasfaser verbunden sind.

13. System nach Anspruch 12, **dadurch gekennzeichnet, dass** eine optische Sende-Schnittstelle der Slave-Vorrichtung zum Senden optischer Signale zur Master-Vorrichtung über ein optisches Bandpassfilter (122) eingestellt werden muss, wobei die Master-Vorrichtung eine optische Empfangs-Schnittstelle hat, die konfiguriert ist, um ein Empfangen optischer Signale zu ermöglichen, die durch das optische Bandpassfilter ausgegeben sind und durch die Slave-Vorrichtung auf einer Trägerwellenlänge gesendet sind, wenn die Trägerwellenlänge im Durchlassband des optischen Bandpassfilters umfasst ist, wobei die Trägerwellenlänge *a priori* unbekannt ist und/oder das Durchlassband des optischen Bandpassfilters *a priori* unbekannt ist, und wobei die Signalisierungsinformation verwendet wird, um die Trägerwellenlänge in Bezug auf das Durchlassband des optischen Bandpassfilters zu verriegeln.

## Revendications

1. Procédé pour transmettre des informations de signalisation via un canal de communication hors-bande dans un réseau de communication optique (100) comprenant un dispositif maître (110) et des dispositifs esclaves (141, 142, 143) connectés au dispositif maître via de la fibre optique, les informations de signalisation contenant des informations d'identification visant à identifier le dispositif esclave transmettant lesdites informations de signalisation, le réseau de communication optique étant adapté pour permettre des communications intra-bande, le canal de communication hors-bande étant destiné à permettre des transmissions desdites informations de signalisation relativement aux communications intra-bandes, des collisions se produisant dans le canal de communication hors-bande lorsque plusieurs dispositifs esclaves accèdent au canal de communication hors-bande en utilisant des longueurs d'onde de porteuses respectives qui correspondent entre elles, dans lequel le dispositif maître transmet (S308) à chaque dispositif esclave susceptible d'accéder de manière concurrente au canal de communication hors-bande des informations représentatives au moins d'un masque que ledit dispositif esclave doit appliquer à des identifiants complets respectifs des dispositifs esclaves afin d'obtenir des informations d'identification respectives réduites à utiliser (S405) par lesdits dispositifs esclaves dans d'autres informations de signalisation à transmettre respectivement par lesdits dispositifs esclaves, les informations d'identification réduites pour chaque dispositif esclave visant à contenir suffisamment de bits d'après ledit masque pour permettre de distinguer ledit dispositif esclave des autres dispositifs esclaves susceptibles d'accéder de manière concurrente au canal de communication hors-bande,
dans lequel le dispositif maître reçoit (S301) en outre, via le canal de communication hors-bande, une information de signalisation dite d'annonce, et le dispositif maître transmet (S308) lesdites informations représentatives au moins dudit masque, en réponse à ladite information de signalisation d'annonce,
dans lequel, lorsque les informations d'identification contenues dans ladite information de signalisation d'annonce permettent de discriminer ledit dispositif esclave des autres dispositifs esclaves susceptibles d'accéder de manière concurrente au canal de communication hors-bande, le dispositif maître stocke (S306) lesdites informations d'identification,
et dans lequel, lorsque les communications intra-bandes sont établies depuis ledit dispositif esclave vers le dispositif maître, le dispositif maître reçoit (S802) l'identifiant complet de dispositif esclave dans lesdites communications intra-bandes et remplaces (S803) les informations d'identification stockées par l'identifiant complet dudit dispositif esclave.

2. Procédé selon la revendication 1, **caractérisé en ce que** le dispositif maître effectue, sur réception de ladite information de signalisation d'annonce :
- déterminer (S304) si les informations d'identification contenues dans ladite information de signalisation d'annonce permettent de discriminer ledit dispositif esclave des autres dispositifs esclaves susceptibles d'accéder de manière concurrente au canal de communication hors-bande ;
- transmettre (S308) les informations représentatives au moins dudit masque lorsque les informations d'identifications contenues dans l'information de signalisation d'annonce permettent de discriminer ledit dispositif esclave des autres dispositifs esclaves susceptibles d'accéder de manière concurrente au canal de communication hors-bande ; et
- transmettre (S305), sinon, une requête de transmettre de nouvelles informations de signalisation d'annonce contenant d'autres informations d'identification.

3. Procédé selon la revendication 2, **caractérisé en ce que** ladite requête indique explicitement quels bits de son identifiant complet ledit dispositif esclave est supposé inclure dans les nouvelles informations de signalisation d'annonce.

4. Procédé selon l'une quelconque des revendications 1 à 3, **caractérisé en ce que**, lorsque ledit masque transmis en réponse desdites informations de signalisation d'annonce diffère d'un masque précédent qui était applicable aux dispositifs esclaves qui étaient déjà connus du dispositif maître comme susceptibles d'accéder de manière concurrente au canal de communication hors-bande par rapport au dispositif esclave ayant transmis lesdites informations de signalisation d'annonce, le dispositif maître diffuse (S308) un masque mis à jour aux dispositifs esclaves, qui est applicable à tous les dispositifs esclaves susceptibles d'accéder de manière concurrente au canal de communication hors-bande.

5. Procédé pour transmettre des informations de signalisation via un canal de communication hors-bande dans un réseau de communication optique (100) comprenant un dispositif maître (110) et des dispositifs esclaves (141, 142, 143) connectés au dispositif maître via de la fibre optique, les informations de signalisation contenant des informations d'identification visant à identifier le dispositif esclave transmettant lesdites informations de signalisation, le réseau de communication optique étant adapté pour permettre des communications intra-bande, le canal de communication hors-bande étant destiné à permettre des transmissions desdites informations de signalisation relativement aux communications intra-bandes, des collisions se produisant dans le canal de communication hors-bande lorsque plusieurs dispositifs esclaves accèdent au canal de communication hors-bande en utilisant des longueurs d'onde de porteuses respectives qui correspondent entre elles, dans lequel chaque dispositif esclave reçoit (S404) du dispositif maître des informations représentatives au moins d'un masque que ledit dispositif esclave doit appliquer à un identifiant complet dudit dispositif esclave afin d'obtenir des informations d'identification réduites à utiliser (S405 ; S503) par ledit dispositif esclave dans d'autres informations de signalisation à transmettre (S504) par ledit dispositif esclave, les informations d'identification réduites visant à contenir suffisamment de bits d'après ledit masque pour permettre de distinguer ledit dispositif esclave des autres dispositifs esclaves susceptibles d'accéder de manière concurrente au canal de communication hors-bande,
dans lequel chaque dispositif esclave transmet, via le canal de communication hors-bande, une information de signalisation dite d'annonce, et chaque dispositif esclave reçoit lesdites informations représentatives au moins dudit masque, en réponse à ladite information de signalisation d'annonce,
et dans lequel, lorsque les communications intra-bandes sont établies depuis ledit dispositif esclave vers le dispositif maître, ledit dispositif esclave transmet (S802) l'identifiant complet dudit dispositif esclave dans lesdites communications intra-bandes de sorte à permettre au dispositif maître de remplacer (S803) des informations d'identification, qui permettent de discriminer ledit dispositif esclave d'autres dispositifs esclaves susceptibles d'accéder de manière concurrente au canal de communication hors-bande et qui ont été précédemment stockées par le dispositif maître, par l'identifiant complet dudit dispositif esclave.

6. Procédé pour transmettre des informations de signalisation via un canal de communication hors-bande dans un réseau de communication optique (100) comprenant un dispositif maître (110) et des dispositifs esclaves (141, 142, 143) connectés au dispositif maître via de la fibre optique, **caractérisé en ce que** le dispositif maître implémente le procédé selon l'une quelconque des revendications 1 à 4, et chaque dispositif esclave implémente le procédé selon la revendication 5.

7. Procédé selon la revendication 6, **caractérisé en ce qu'**une interface de transmission optique dudit dispositif esclave doit être ajustée pour transmettre des signaux optiques au dispositif maître via un filtre passe-bande optique (122), le dispositif maître ayant une interface de réception optique configurée pour permettre de recevoir des signaux optiques sortis par ledit filtre passe-bande optique et transmis par ledit dispositif esclave sur une longueur d'onde porteuse lorsque ladite longueur d'onde porteuse est comprise dans une bande passante du filtre passe-bande optique, ladite longueur d'onde porteuse étant *a priori* inconnue et/ou ladite bande passante du filtre passe-bande optique étant *a priori* inconnue, et dans lequel lesdites informations de signalisation sont utilisées pour verrouiller ladite longueur d'onde porteuse au regard de ladite bande passante du filtre passe-bande optique.

8. Programme d'ordinateur comprenant des instructions de code de programme qui peuvent être chargées dans un dispositif programmable pour implémenter le procédé selon l'une quelconque des revendications 1 à 4, ou selon la revendication 5, lorsque les instructions de code de programme sont exécutées par le dispositif programmable.

9. Support de stockage d'informations stockant un programme d'ordinateur comprenant des instructions de code de programme qui peuvent être chargées dans un dispositif programmable pour implémenter le procédé selon l'une quelconque des revendications 1 à 4, ou selon la revendication 5, lorsque les instructions de code de programme sont exécutées par le dispositif programmable.

10. Dispositif maître (110) adapté pour recevoir des informations de signalisation via un canal de communication hors-bande dans un réseau de communication optique (100) comprenant en outre des dispositifs esclaves (141, 142, 143) connectés au dispositif maître via de la fibre optique, les informations de signalisation contenant des informations d'identification visant à identifier le dispositif esclave transmettant lesdites informations de signalisation, le réseau de communication optique étant adapté pour permettre des communications intra-bande, le canal de communication hors-bande étant destiné à permettre des transmissions desdites informations de signalisation relativement aux communications intra-bandes, des collisions se produisant dans le canal de communication hors-bande lorsque plusieurs dispositifs esclaves accèdent au canal de communication hors-bande en utilisant des longueurs d'onde de porteuses respectives qui correspondent entre elles, dans lequel le dispositif maître implémente des moyens pour transmettre (S308) à chaque dispositif esclave susceptible d'accéder de manière concurrente au canal de communication hors-bande des informations représentatives au moins d'un masque que ledit dispositif esclave doit appliquer à des identifiants complets respectifs des dispositifs esclaves afin d'obtenir des informations d'identification respectives réduites à utiliser (S405) par lesdits dispositifs esclaves dans d'autres informations de signalisation à transmettre respectivement par lesdits dispositifs esclaves, les informations d'identification réduites pour chaque dispositif esclave visant à contenir suffisamment de bits d'après ledit masque pour permettre de distinguer ledit dispositif esclave des autres dispositifs esclaves susceptibles d'accéder de manière concurrente au canal de communication hors-bande,
dans lequel le dispositif maître implémente en outre des moyens pour recevoir (S301), via le canal de communication hors-bande, une information de signalisation dite d'annonce, et des moyens pour transmettre (S308) lesdites informations représentatives au moins dudit masque, en réponse à ladite information de signalisation d'annonce,
dans lequel, lorsque les informations d'identification contenues dans ladite information de signalisation d'annonce permettent de discriminer ledit dispositif esclave des autres dispositifs esclaves susceptibles d'accéder de manière concurrente au canal de communication hors-bande, le dispositif maître implémente des moyens pour stocker (S306) lesdites informations d'identification,
et dans lequel, lorsque les communications intra-bandes sont établies depuis ledit dispositif esclave vers le dispositif maître, le dispositif maître implémente des moyens pour recevoir (S802) l'identifiant complet de dispositif esclave dans lesdites communications intra-bandes et des moyens pour remplacer (S803) les informations d'identification stockées par l'identifiant complet dudit dispositif esclave.

11. Dispositif esclave (141) adapté pour transmettre des informations de signalisation via un canal de communication hors-bande dans un réseau de communication optique (100) comprenant en outre un dispositif maître (110) et d'autres dispositifs esclaves (142, 143) aussi connectés au dispositif maître via de la fibre optique, les informations de signalisation contenant des informations d'identification visant à identifier le dispositif esclave transmettant lesdites informations de signalisation, le réseau de communication optique étant adapté pour permettre des communications intra-bande, le canal de communication hors-bande étant destiné à permettre des transmissions desdites informations de signalisation relativement aux communications intra-bandes, des collisions se produisant dans le canal de communication hors-bande lorsque plusieurs dispositifs esclaves accèdent au canal de communication hors-bande en utilisant des longueurs d'onde de porteuses respectives qui correspondent entre elles, dans lequel ledit dispositif esclave implémente des moyens pour recevoir (S404) du dispositif maître des informations représentatives au moins d'un masque que ledit dispositif esclave doit appliquer à un identifiant complet dudit dispositif esclave afin d'obtenir des informations d'identification réduites à utiliser (S405 ; S503) par ledit dispositif esclave dans d'autres informations de signalisation à transmettre (S504) par ledit dispositif esclave, les informations d'identification réduites visant à contenir suffisamment de bits d'après ledit masque pour permettre de distinguer ledit dispositif esclave des autres dispositifs esclaves susceptibles d'accéder de manière concurrente au canal de communication hors-bande,
dans lequel ledit dispositif esclave implémente en outre des moyens pour transmettre, via le canal de communication hors-bande, une information de signalisation dite d'annonce, et ledit dispositif esclave reçoit lesdites informations représentatives au moins dudit masque, en réponse à ladite information de signalisation d'annonce,
et dans lequel, lorsque les communications intra-bandes sont établies depuis ledit dispositif esclave vers le dispositif maître, ledit dispositif esclave implémente des moyens pour transmettre (S802) l'identifiant complet dudit dispositif esclave dans lesdites communications intra-bandes de sorte à permettre au dispositif maître de remplacer (S803) des informations d'identification, qui permettent de discriminer ledit dispositif esclave d'autres dispositifs esclaves susceptibles d'accéder de manière concurrente au canal de communication hors-bande et qui ont été précédemment stockées par le dispositif maître, par l'identifiant complet dudit dispositif esclave.

12. Système adapté pour transmettre des informations de signalisation via un canal de communication hors-bande dans un réseau de communication optique (100), **caractérisé en ce que** le système comprend dispositif maître (110) selon la revendication 10 et des dispositifs esclaves (141, 142, 143) selon la revendication 11, les dispositifs esclaves étant connectés au dispositif maître via de la fibre optique.

13. Système selon la revendication 12, **caractérisé en ce qu'**une interface de transmission optique dudit dispositif esclave doit être ajustée pour transmettre des signaux optiques au dispositif maître via un filtre passe-bande optique (122), le dispositif maître ayant une interface de réception optique configurée pour permettre de recevoir des signaux optiques sortis par ledit filtre passe-bande optique et transmis par ledit dispositif esclave sur une longueur d'onde porteuse lorsque ladite longueur d'onde porteuse est comprise dans une bande passante du filtre passe-bande optique, ladite longueur d'onde porteuse étant *a priori* inconnue et/ou ladite bande passante du filtre passe-bande optique étant *a priori* inconnue, et dans lequel lesdites informations de signalisation sont utilisées pour verrouiller ladite longueur d'onde porteuse au regard de ladite bande passante du filtre passe-bande optique.
